(19) Europäisches Patentamt
European Patent Office
Office européen des brevets

(11) Veröffentlichungsnummer : **0 331 629 B1**

(12) # EUROPÄISCHE PATENTSCHRIFT

(45) Veröffentlichungstag der Patentschrift :
**08.01.92 Patentblatt 92/02**

(51) Int. Cl.$^5$ : **G01N 21/47, G01J 3/46, G01J 3/28, B41F 33/00**

(21) Anmeldenummer : **89810060.7**

(22) Anmeldetag : **24.01.89**

(54) **Handgerät zur Erfassung der optischen Remissionseigenschaften.**

(30) Priorität : **02.02.88 CH 361/88**

(43) Veröffentlichungstag der Anmeldung :
**06.09.89 Patentblatt 89/36**

(45) Bekanntmachung des Hinweises auf die Patenterteilung :
**08.01.92 Patentblatt 92/02**

(84) Benannte Vertragsstaaten :
**CH DE FR GB IT LI**

(56) Entgegenhaltungen :
**EP-A- 0 171 360**
**EP-A- 0 242 725**
**DE-A- 3 313 668**
**US-A- 4 093 991**
**PROCEEDINGS OF THE SOCIETY OF PHOTO-OPTICAL INSTRUMENTATION ENGINEERS, Band 240, 1980, Seiten 82-88, SPIE, Bellingham, US; J.M. LERNER et al.: "Diffraction gratings ruled and holographic-a review"**

(56) Entgegenhaltungen :
**SPECTROCHIMICA ACTA, Band 27B, Nr. 8, August 1972, Seiten 377-383, Pergamon Press; M. NORDMEYER: "Eine einfache Messanordnung zur photoelektrischen Spektrometrie möglichst kleiner Konzentrationen"**
**ELEKTROTECHNIK, Band 69, Nr. 3, 27. Februar 1987, Seiten 28-32,37,38; H. HENCKE: "Unterscheiden kleinste Differenzen"**
**PATENT ABSTRACTS OF JAPAN, Band 11, Nr. 370 (P-642)[2817], 3. Dezember 1987, Seite 162 P 642; & JP-A-62 142 240**
**NOUVELLES GRAPHIQUES, Band 37, Nr. 2, Januar 1987, Seite 2, Deurne, Antwerpen, BE; "La nature connaît ses imperfections. Macbeth y pallie"**

(73) Patentinhaber : **GRETAG Aktiengesellschaft**
**Althardstrasse 70**
**CH-8105 Regensdorf (CH)**

(72) Erfinder : **Schrämmli, Fortunat**
**Iltisstrasse 462**
**CH-5212 Hausen (CH)**
Erfinder : **Berner, Markus**
**Adliboden 10**
**CH-8155 Niederhasli (CH)**
Erfinder : **Ott, Hans**
**Ostring 54**
**CH-8105 Regensdorf (CH)**

(74) Vertreter : **Kleewein, Walter, Dr. et al**
**Patentabteilung CIBA-GEIGY AG Postfach**
**CH-4002 Basel (CH)**

EP 0 331 629 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Handgerät zur Erfassung photometrischer Daten gemäß dem Oberbegriff des Anspruchs 1.

Ein Aufsichts-Hand-Densitometer für die graphische Industrie ist aus der US-A-4645350 bekannt und gestattet es, mit Hilfe eines ausfahrbaren Meßkopfes eine Meßfläche zu beleuchten und die Intensität des von der Meßfläche reflektierten Lichtes nach Durchgang durch einen selektierbaren Meßfilter zu bestimmen, um die Remission oder Dichte einer Druckfarbe zu ermitteln. Die auswechselbaren Meßfilter sind in einem Filterrad angeordnet, das mit Hilfe eines Motors so verdreht werden kann, daß nacheinander alle vier vorhandenen Meßfilter in den Meßstrahlengang eingeführt werden können. Auf diese Weise kann das bekannte Gerät als Densitometer für vier verschiedene Spektralbereiche verwendet werden.

Aus der DE-A-3313668 ist ein Farbmeßgerät bekannt, bei dem der Meßkopf und eine Auswerteeinheit zu einer einzigen Baueinheit mit einer aufladbaren Energiequelle als Stromversorgung zusammengefaßt sind. Durch das Zusammenfassen dieser beiden Bestandteile zu einer einzigen Baueinheit ohne ein Verbindungskabel zwischen dem Meßkopf und der Auswerteeinheit ergibt sich eine gewisse Miniaturisierung und erleichterte Handhabung.

Dennoch ist das bekannte Farbmeßgerät relativ voluminös und in seinen Einsatzmöglichkeiten verhältnismäßig stark eingeschränkt. Zum Aufladen der Energiequelle des Farbmeßgerätes wird dieses auf ein Ladegerät gesetzt, das dann mit der aus dem Meßkopf und der Auswerteeinheit gebildeten Einheit eine einheitliche trennbare Einheit bildet.

In der EP-A-0242725 ist ein Spektralphotometer beschrieben, das in einem möglichst großen Abstand von der Meßfläche angeordnet werden kann und über eine Lichtquelle mit einer zugeordneten Beleuchtungsoptik als erste Baueinheit sowie über eine zweite Baueinheit verfügt, die das reflektierte Licht auswertet. Beide Einheiten sind zwar in einem einzigen Gehäuse nebeneinanderliegend angeordnet, jedoch kommt es im Hinblick auf den angestrebten großen Abstand zur Meßoberfläche nicht auf einen besonders kompakten Aufbau der zweiten Einheit an, die einen Polychromator mit einem Beugungsgitter enthält. Da das Beugungsgitter als ebenes Beugungsgitter ausgebildet ist, ist zwischen dem Beugungsgitter und einer Photodiodenzeile eine Kollimatoroptik erforderlich. Statt einer Photodiodenzeile kann auch eine einzige Photodiode vorgesehen sein, wenn das dispersive Element durchstimmbar ausgestaltet ist. Dem dispersiven Element, das als Beugungsgitter oder als Prisma ausgebildet ist, ist auf der Lichteinfallseite ebenfalls eine Kollimatoroptik zugeordnet, so daß der bekannte Polychromator wegen der Kollimatoroptiken verhältnismäßig groß und für ein Handgerät ungeeignet ist.

Holographisch hergestellte konkave Reflexionsgitter sind aus Proceedings of the Society of Photo-Optical Instrumentation Engineers, Band 240, Periodic Structures, Gratings, Moiré Patterns, and Diffraction Phenomena, 29. Juli — 1. August 1980, San Diego, S.P.I.E., 1980, (Bellingham, Washington, US), J.M. Lerner : "Diffraction gratings ruled and holographic — a review", Seiten 82-88 bekannt. Wie derartige Gitter zur Miniaturisierung von Handgeräten zur Erfassung von optischen Remissionseigenschaften beitragen können, ist in dem Übersichtsartikel nicht beschrieben oder sonst- wie erörtert.

Der US-A-4093991 ist ein Spektralphotometer mit einem Monochromator entnehmbar, dessen Ausgangslicht einen optischen Sensor speist, der mit einem eine Tastatur aufweisenden Mikrocomputer verbunden ist. Da der Lichtquelle und dem Monochromator eine Integrationskugel zugeordnet ist, ergibt sich ein verhältnismäßig voluminöser Aufbau der optischen Komponenten. Der Monochromator ist mit einer Kodiereinrichtung verbunden, die es dem Mikrocomputer gestattet, eine digitale Wellenlängenselektion vorzunehmen. Der Monochromator verfügt über ein scheibenförmiges Interferenzkeilfilter mit einer Achse, deren Drehstellung der ausgewählten Wellenlänge zugeordnet ist. Zusammen mit der vorgeschalteten und nachgeschalteten Linsenanordnung ergibt sich ein voluminöser Aufbau der für ein Laborgerät, nicht jedoch für ein miniaturisiertes Handgerät brauchbar ist.

In dem Artikel M. Nordmeyer : "Eine einfache Messanordnung zur photoelektrischen Spektrometrie möglichst kleiner Konzentrationen", der in Spectrochimica Acta, Band 27B, Nr. 8, August 1972, Pergamon Press, (Nord-Irland) veröffentlicht ist, sind eine elektronische Schaltung und eine Wechselmethode beschrieben, bei der Signalstärken am Ort einer Spektrallinie und am Ort einer representativen Untergrundstelle abwechselnd photoelektrisch gemessen werden. Die elektrische Schaltung zur Realisierung der Wechselmethode enthält zwei Integratoren.

In Elektrotechnik, Band 69, Nr. 3, 27. Februar 1987, (Würzburg, DE), H. Hencke : "Unterscheiden kleinste Differenzen", Seiten 28-38 ist ein speziell entwickelter Farbsensor vorgestellt, der sehr genau und relativ schnell am Fließband arbeiten kann. Der Farbsensor verfügt über ein weißes Licht zu einem Meßobjekt aussendendes optisches System und eine das von der Meßfläche des Meßobjektes reflektierte Licht empfangende Rot-Grün-Blau-Photodiode zur Erzeugung eines elektrischen Analogsignals. Dem Farbsensor ist ein Steuergerät zugeordnet, das über eine serielle Kommunikationsschnittstelle verfügt, über die zum Beispiel der Bräunungsgrad von Keramikscheiben vom Farbsensor gesteuert werden kann.

Ein photoelektrisches Farbmeßgerät, das Farb- und Dichtewerte zu erfassen gestattet, ist aus Patent Abstracts of Japan, Band 11, Nr. 370 (P-642) (2817), 3. Dezember 1987 und der JP-A-62142240 (MINOLTA CAMERA CO. LTD) 25. Juni 1987 bekannt. Das photoelektrische Farbmeßgerät verfügt über eine einen Rechner enthaltende Anordnung zur Verarbeitung der von einer Sensoranordnung erfaßten Daten. Dabei sind verschiedene Speicher für Programme, für Farbumrechnungen sowie zum Abspeichern von Farb- und Dichteinformationen vorgesehen.

Aus Nouvelles Graphiques, Band 37, Nr. 2, Januar 1987, (Deurne, Antwerpen, BE), "La nature connait ses imperfections. Macbeth y pallie", Seite 2 ist ein tragbares und automatisches Handdensitometer bekannt, das über einen Rechner verfügt, dessen Programme es gestatten, die gemessene Farbe, die Art der Meßfläche sowie das verwendete Papier zu identifizieren.

Bei dem bekannten Handgerät ist lediglich eine densitometrische Auswertung, nicht jedoch eine Bestimmung von farbmetrischen Größen möglich.

Der Erfindung liegt die Aufgabe zugrunde, ein Handgerät der bekannten Art so zu verbessern, daß die sich durch das Auswechseln vorgegebener Meßfilter ergebenden Einschränkungen bezüglich der erfaßbaren photometrischen Daten weitgehend vermieden werden.

Diese Aufgabe wird erfindungsgemäß durch die kennzeichnenden Merkmale des Patentanspruchs 1 gelöst.

Besonders vorteilhafte Ausführungsformen und Weiterbildungen ergeben sich aus den Unteransprüchen.

Nachfolgend werden Ausführungsbeispiele der Erfindung anhand der Zeichnung näher erläutert. Es zeigen:

- Fig. 1 eine Seitenansicht des erfindungsgemäßen Handgerätes, teilweise im Schnitt,
- Fig. 2 eine Draufsicht auf das Handgerät,
- Fig. 3 eine schematische Darstellung der optischen und elektronischen Komponenten des Handgerätes und
- Fig. 4 das Blockschaltbild eines Analog/Digital-Wandlers zur Digitalisierung der Meßlichtintensität und der Lampenlichtintensität im Meßkopf des Handgerätes.

Das in Fig. 1 in einer Seitenansicht teilweise aufgeschnitten dargestellte Gerät entspricht in seinen äußeren Abmaßen einem Aufsichts-Hand-Densitometer und ist daher entsprechend kompakt aufgebaut. Im Gegensatz zu einem üblichen Densitometer gestattet es das in Fig. 1 dargestellte Handgerät jedoch, neben densitometrischen Größen auch Remissions- und Dichte-Spektren sowie farbmetrische Größen zu erfassen.

Das Handgerät verfügt über ein Gehäuse 1, in dem eine oder mehrere Printplatten 2, 3 für eine Meßwertverarbeitungs- und Steuerlogik angeordnet sind, was im oberen Teil des aufgeschnittenen Gehäuses 1 schematisch dargestellt ist.

Aus der linken Seitenwand des Gehäuses 1 ragt ein Meßkopf 4 heraus, der zwischen einer in Fig. 1 mit durchgezogenen Linien dargestellten Ruhestellung und einer in Fig. 1 gestrichelt dargestellten Arbeitsstellung entlang dem Doppelpfeil 5 parallel zum Boden 6 des Gehäuses 1 verfahren werden kann. In der eingefahrenen Ruhestellung ragt eine Visierplatte 7 über den Rand des Meßkopfes 4 hinaus, was insbesondere in Fig. 2 deutlich zu erkennen ist. Die Visierplatte 7 verfügt über eine Meßblende 8, die dazu dient, die Lage und Größe des Meßfleckes des Meßkopfes 4 in der Arbeitsstellung anzuzeigen und Streulicht abzuschirmen.

Wenn der Meßkopf 4 aus der in den Fig. 1 und 2 dargestellten Ruhestellung in die in den Fig. 1 und 2 gestrichelt dargestellte Arbeitsstellung oder Meßposition ausgefahren ist, verläuft die optisch wirksame Achse des Meßkopfes 4 genau durch den Mittelpunkt der Meßblende 8.

In den Fig. 1 und 2 erkennt man weiterhin einen Filterradantrieb 9, der mit einem im Meßkopf 4 vorgesehenen Filterrad in Eingriff steht und es gestattet, in den Strahlengang des Meßkopfes 4 je nach Wunsch einen Polarisator für das Messen nasser Druckbogen, ein D65-Konversionsfilter für die Berücksichtigung der Fluoreszenz oder eine Blende ohne Filter einzubringen. Der Filterradantrieb 9 hat somit drei Positionen, die von Hand eingestellt werden, jedoch auf einem Anzeigefeld 10, beispielsweise einem Flüssigkristall-Display, dargestellt werden können.

Das Anzeigefeld 10 dient auch zur Darstellung der mit dem Handgerät erfaßten Meßwerte in numerischer Form oder in Gestalt von Spektren oder Balkendiagrammen. Zur Bedienung des Handgerätes sind um das Anzeigefeld 10 eine Reihe von Tasten einer Tastatur 11 sowie mehrere den Anzeigen auf dem Anzeigefeld 10 zugeordnete Hinweisfelder 12 vorgesehen. Das Anzeigefeld 10, die Tastatur und die Hinweisfelder 12 befinden sich auf der Oberseite 13 des Gehäuses 1, wobei auf der von dem Meßkopf 4 wegweisenden Seite eine großflächige Meßtaste 14 zum Auslösen eines Meßvorganges vorgesehen ist.

Beim Betätigen der Meßtaste 14 wird die Meßwertverarbeitungs- und Steuerlogik veranlaßt, den Meßkopf 4 aus der Ruhestellung in die Arbeitsstellung zu verfahren, um mit Hilfe einer im Innern des Gehäuses 1 vorgesehenen Spektralkammer mit einem in Fig. 3 dargestellten Beugungsgitter 55 das Spektrum des Lichtes zu erfassen, das beispielsweise von einem Druckbogen, auf dem das Handgerät ruht, an der Stelle der Meßblende 8 remittiert wird. Die Verarbeitung des Remissions-Spektrums erfolgt mit Hilfe der Meßwertverarbeitungs- und Steuerlogik. Nach dem Erfassen des Spektrums fährt der Meßkopf 4 wieder in seine Ruhestellung zurück, bis ein erneuter Meßvorgang durch Betätigen der Meßtaste 14 ausgelöst wird.

Das Verfahren des Meßkopfes 4 erfolgt mit Hilfe eines in der Zeichnung nicht dargestellten Meßwagens, der innerhalb des Gehäuses 1 längs verschieblich geführt ist.

Der zusammen mit einer Reihe von optischen, optoelektronischen, elektronischen und mechanischen Bauteilen auf dem Meßwagen angeordnete Meßkopf 4 ist in Fig. 3 gesondert zusammen mit einigen zugeordneten Bauteilen dargestellt. Nachfolgend sei angenommen, daß der Meßkopf 4 in die Meßposition vorgefahren ist und von einer im Meßkopf 4 vorgesehenen Lampe 56 ein Meßfleck 57 mit einem Durchmesser von 3 mm unter einem Winkel von 45° beleuchtet wird. Neben der Lampe 56 enthält der Meßkopf 4 dazu eine Reihe von in der Zeichnung nicht dargestellten optischen Komponenten. Das vom Meßfleck 57 senkrecht nach oben reflektierte Licht wird innerhalb eines Winkels von ca. 5° gesammelt und ausgewertet. Das Anzeigefeld 10 zeigt zusammen mit einem zugeordneten Hinweisfeld 12 jeweils an, welche Lichtart, insbesondere Lichtart A, Lichtart C oder Lichtart D65, ausgewählt ist. Außerdem wird angezeigt, welche der drei bereits erwähnten Filterradpositionen, nämlich keine Filterung, Polarisation oder D65-Konversions-Filter, gewählt worden ist. Die Filterposition des im Meßkopf 4 untergebrachten und über den Filterradantrieb 9 verstellbaren Filters wird wie bereits erwähnt ebenfalls auf dem Anzeigefeld 10 angezeigt.

Das in der Zeichnung nicht dargestellte Filter muß vor der Messung in die gewünschte Position gebracht werden. Messungen mit dem vorgesehenen gekreuzten Polarisator ergeben auf nassen und trockenen Druckbogen die gleichen Resultate. Dieses aus der Densitometrie bereits bekannte Verfahren wird bei dem beschriebenen Gerät auch im Zusammenhang mit der Farbmetrik eingesetzt.

Beim Einschalten des D65-Konversions-Filters konvertiert das Filter das Lampenlicht (Lichtart A) zu Tageslicht (Lichtart D65). Somit gestattet es das Handgerät, auch fluoreszierende Farben richtig zu messen. Die Filterradstellung, bei der eine D65-Filterung erfolgt, ist vor allem für eine Anwendung in der Farbmetrik vorgesehen.

Das vom Meßfleck 57 auf der untersuchten Fläche remittierte und vom Meßkopf 4 erfaßte Licht gelangt in die Spektralkammer, die einen holographischen Monochromator mit dem Beugungsgitter 55 enthält. Das Beugungsgitter 55 dient zur spektralen Zerlegung des über einen Eintrittsspalt 59 mit einer Breite von 0,75 mm in die Spektralkammer einfallenden Lichtes und ist z.B. als holographisches, konkaves Reflexionsgitter mit 1250 Linien/mm ausgebildet und bezüglich seines Wirkungsgrades auf blau optimiert. Die dem Beugungsgitter 55 zugeordneten Komponenten bilden einen Monochromator, der durchstimmbar ist. Das Beugungsgitter 55 ist in einer Halterung 60 aufgenommen, die an einer Gitterwelle 30 befestigt ist, die mit Hilfe eines Antriebsmotors 31 verdrehbar ist. Der Antriebsmotor 31 ist in Fig. 3 zur Vereinfachung der Zeichnung direkt mit der Gitterwelle 30 verbunden dargestellt, obwohl beim beschriebenen Ausführungsbeispiel ein Untersetzungsgetriebe vorgesehen ist, um eine sehr präzise reproduzierbare Gitterstellung einstellen zu können. Die Gitterwelle 30 verläuft im rechten Winkel zur Einstrahlebene, die durch das durch den Eintrittsspalt 59 eintretende und durch den Austrittsspalt 61, der ebenfalls eine Breite von 0,75 mm hat, austretende Licht aufgespannt wird. Der Winkel D zwischen dem Eintritts- und Austrittsstrahl beträgt z.B. 25°.

Das durch den Austrittsspalt 61 austretende monochromatische Licht beaufschlagt eine Photodiode 62, die das optische Signal in ein elektrisches Signal umwandelt.

Je nach der Intensität des vom Meßfleck 57 innerhalb des eingestellten Spektralbereichs reflektierten Lichtes wird in der Photodiode 62 ein mehr oder weniger großer Photostrom erzeugt. Die Auflösung des mit Hilfe des Beugungsgitters 55 aufgebauten Monochromators sowie die Eigenschaften der übrigen Bauteile sind so gewählt, daß über den ganzen sichtbaren Bereich von 380 bis 730 nm spektrale Stützstellen mit 10 nm-Abständen verarbeitet werden können. Auf diese Weise gestattet es das Handgerät, ein Remissions-Spektrum oder ein Dichte-Spektrum mit 36 Stützstellen zu messen. Die bei einer Abtastung des gesamten Spektrums von der Photodiode 62 erfaßten Intensitäten dienen dazu, alle Meßfunktionen des Handgerätes mit Hilfe eines Rechners 63 zu berechnen.

Die Photodiode 62 ist mit dem Eingang eines Verstärkers 64 verbunden, der einen Analog/Digital-Wandler 65 speist, durch den die von der Photodiode 62 erfaßten analogen Größen zur Verarbeitung im Rechner 63 digitalisiert werden. Der Ausgang des Analog/Digital-Wandlers 65 ist über einen Bus 66 mit einem Eingang des Rechners 63 verbunden.

Neben dem Eingang für die Daten des Analog-Digital-Wandlers 65 verfügt der Rechner 63, der einen Teil der eingangs erwähnten Meßwertverarbeitungs- und Steuerlogik darstellt, für die übrige Peripherie-Elektronik

über weitere Eingänge. Insbesondere erkennt man in Fig. 3 einen Eingang 66', über den beim Betätigen der Meßtaste 14 ein Startsignal für einen Erfassungsvorgang ausgelöst wird. Die Tastatur 11 zur direkten Bedienung des Handgerätes ist mit einem Tastatureingang 67 des Rechners 63 verbunden. Dem Antriebsmotor 31 ist eine Motorelektronik 68 zugeordnet, die über einen Positionseingang 69, insbesondere bei einer Absolutpositionserfassung der Position des Antriebsmotors 31 erfaßte Daten zum Rechner 63 weitergibt.

Die Motorelektronik 68 dient einerseits zur Motoransteuerung und andererseits zur Absolutpositions-Erfassung. Die Motorpositionierung des Antriebsmotors 31 muß sehr genau sein, da von ihr die Lage des Beugungsgitters 55 und des augenblicklichen ausgewählten Spektralbereiches abhängt. Beim Antriebsmotor 31 handelt es sich um einen Gleichstrommotor, dessen Motordrehzahl mittels einer PLL-Schaltung geregelt wird. Die Sollfrequenz liefert der Quarz des im Rechner 63 vorhandenen Mikroprozessors, wobei die Quarzfrequenz von einem Timer im Prozessor heruntergeteilt wird. Die Istfrequenz liefert ein Inkremental-Geber am Antriebsmotor 31 mit 120 Inkrementen pro Umdrehung. Auf diese Weise ist gewährleistet, daß der Antriebsmotor 31 quarzgenau dreht.

Die spezielle Art des verwendeten Phasendetektors, der als synchroner Automat aufgebaut ist, erlaubt es zudem, allfällige Fehlersituationen, z.B. ein einmaliges "Aushängen" des PLL zuverlässig zu erkennen.

Zur Absolutpositions-Erfassung des Gitterantriebs dienen in der Zeichnung nicht dargestellte Lichtschranken, denen Geberscheiben auf verschiedenen Wellen des in der Zeichnung nicht dargestellten Getriebes zwischen dem Antriebsmotor 31 und der Gitterwelle 30 zugeordnet sind. Die Lichtschranken und die Geberscheiben gestatten eine genaue Erkennung der Motorposition und damit der Gitterposition. Während die Rückmeldung der Motorposition über den Positionseingang 69 erfolgt, erfolgt über den Motorausgang 70 des Rechners 63 eine Ansteuerung der Motorelektronik 68 und damit des Antriebsmotors 31.

Zusätzlich zum Motorausgang 70 verfügt der Rechner 63 über einen Datenausgang 71, der mit einer Anzeigesteuerung 72 verbunden ist, die ihrerseits eine Anzeigeeinheit 73 mit dem Anzeigefeld 10 speist. Das Anzeigefeld 10 ist als Flüssigkristall-Vollgraphik-Punktmatrix-Display mit 64 × 128 Punkten ausgebildet. Die Tastatur 11 umfaßt zehn Tasten zur direkten Bedienung des Gerätes zusätzlich zur Meßtaste 14 zur Auslösung einer Messung.

Das Handgerät ist jedoch nicht nur über die Tastatur 11 direkt bedienbar, sondern auch zusätzlich über eine serielle Schnittstelle 74 fernbedienbar, für die an dem in den Fig. 1 und 2 gezeigten Gehäuse 1 an der dem Meßkopf 4 gegenüberliegenden Seite eine Buchse vorgesehen ist und die bidirektional arbeitet, damit man das Handgerät fernbedienbar einsetzen kann.

Die serielle Schnittstelle 74 ist ähnlich dem Standard RS 232 aufgebaut und gestattet es, sämtliche Funktionen, die normalerweise von Hand über die Tastatur 11 ausgewählt werden können, auch über ein mit der seriellen Schnittstelle 74 verbundenes Kabel fernbedient auszulösen. Weiterhin gestattet es die serielle Schnittstelle 74 Meßresultate auszulesen und insbesondere, ein Meßresultat auf einen Drucker auszugeben.

Das Handgerät wird mit Hilfe eines Akkumulators 75 betrieben, der in Fig. 3 schematisch dargestellt ist und im Gehäuse 1 in der Nähe der Buchse für die serielle Schnittstelle untergebracht sein kann. Der Akkumulator 75 ist über eine Ladebuchse 77 nachladbar, die ebenfalls auf der dem Meßkopf 4 gegenüberliegenden Seite des Gehäuses 1 angeordnet ist. Um den Akkumulator 75 zu schonen, ist eine direkte Stromversorgung über eine externe Quelle alternativ möglich. Die von den verschiedenen Bauteilen des Handgerätes benötigten Spannungen werden mittels eines getakten Spannungswandlers 78 erzeugt, um einen optimalen Wirkungsgrad und damit eine möglichst geringe Verlustwärme zu gewährleisten. Außerdem ergibt sich dadurch bei einer Akkumulatorladung eine große Anzahl möglicher Meßvorgänge. Um Strom zu sparen, wird die Hauptversorgung nach jeder Aktion, bei der der Meßkopf 4 aus dem Gehäuse 1 aus- und eingefahren wird, wieder ausgeschaltet. Die Hauptversorgung ist nach einer solchen Aktion jeweils nur noch für 0,1 bis 1,5 Sekunden aktiv. Die während einer Messung erfaßten Daten sowie die aus diesen Daten erfaßten Größen werden vom Anzeigefeld 10 noch für etwa 30 Sekunden angezeigt, weshalb die Anzeigeeinheit 73 länger aktiv bleibt und z.B. noch etwa 30 Sekunden mit Strom versorgt wird. Die Tastatur 11, die serielle Schnittstelle 74 sowie ein nichtflüchtiger RAM 76 haben immer Spannung, damit das Gerät wieder eingeschaltet werden kann und die Daten nicht verloren gehen. Das saubere Ein- und Ausschalten steuert ein synchroner Zustandsautomat sowie einige analoge Überwachungsschaltungen, die in Fig. 3 nicht gesondert eingezeichnet sind.

Der in Fig. 3 schematisch dargestellte Rechner 63 verfügt über eine zentrale Prozessoreinheit oder CPU 79 sowie über mehrere Direktzugriffsspeicher, nämlich dem bereits erwähnten nichtflüchtigen RAM 76 sowie einem flüchtigen RAM 80 und einem Festwertspeicher oder ROM 81. Die Speicher dienen einerseits zur Zwischenspeicherung von Zwischenergebnissen und andererseits zur dauerhaften Speicherung von Programmen, Tabellen, Eichkurven und dergleichen.

Der Rechner 63 berechnet aus den mit Hilfe des Meßkopfes und des das Beugungsgitter 55 enthaltenden Monochromators erhaltenen Spektren unter Berücksichtigung jeweiliger Korrekturgrößen sämtliche Ausgabedaten des Handgerätes. Aus diesem Grunde ist das beschriebene Handgerät nicht nur kompakt, sondern

stellt auch ein sehr universelles Aufsichts-Hand-Spektrometer für die graphische Industrie dar, das die erfaßten photometrischen Größen vielseitig auswertet und interpretiert. Mit Hilfe der gespeicherten Programme gestattet es das Gerät, nicht nur klassische densitometrische Größen, sondern auch Spektren sowie farbmetrische Größen zu erfassen. Dabei können Vergleichsmessungen mit verschiedenen Referenzwerten, die im RAM 76 abgespeichert werden können, durchgeführt werden. Außerdem können die Messungen auf verschiedene Weiß, nämlich Absolutweiß und Papierweiß bezogen werden. Weiterhin kann mit polarisiertem und auch angenähertem D65-Licht gemessen werden.

Der Rechner 63 steuert einerseits den Antrieb der Gitterwelle 30 und damit den Antrieb des Beugungsgitters 55 und andererseits das Aus- und Einfahren des Meßwagens, an dem der Meßkopf 4 mit den zugeordneten Komponenten befestigt ist. Insbesondere ist der Analog/Digital-Wandler 65 auf dem bewegten Meßsystem angeordnet.

Die Tastatur 11 umfaßt eine Datenschutz-Taste, die betätigt werden muß, um gewisse kritische Funktionen, die nicht aus Versehen angewählt werden dürfen, auszuführen. Wenn die Meßtaste 14 betätigt wird, führt das Gerät jeweils eine spektrale Messung durch und zwar auch dann, wenn nur eine Densitometer-Auswertung vorgesehen ist. Unabhängig von der nach der Spektraldatenerfassung vorzunehmenden Auswertung, wobei auch mehrere Auswertungen aufgrund der gleichen Daten möglich sind, werden vom Rechner 63 alle Meßfunktionen aus dem erfaßten Spektrum berechnet. Sämtliche Funktionen können auch erst nach der eigentlichen Messung angewählt und ausgegeben werden.

Mit Hilfe des im Rechner 63 abgespeicherten Programms ist es möglich, sowohl Remissions-Spektren als auch Dichte-Spektren zu verarbeiten und auf dem Anzeigefeld 10 anzuzeigen. Wegen der spektralen Messung gestattet es das Gerät, beliebige densitometrische Meßfunktionen auszuführen. Dazu werden aus dem Spektrum die herkömmlichen densitometrischen Größen gemäß den dem Fachmann bekannten Formeln berechnet. Dabei ist es dem Rechner 63 mit Hilfe gespeicherter und der Norm entsprechenden Filtercharakteristiken möglich, Standarddichten für die verschiedenen Druckfarben (Black, Cyan, Magenta, Yellow) zu bestimmen.

Die im Rechner 63 abgespeicherten Spektren gestatten es, ohne mechanisch bewegte Filter automatisch ein elektronisch abgespeichertes Filter auszuwählen und mit diesem weiterzuarbeiten. Auf diese Weise ist mit dem beschriebenen Gerät eine automatische Farberkennung bei den drucktechnischen Skalenfarben durchführbar.

Während bei mechanischen Filtern relativ viel Platz und Kosten investiert werden müssen, ist es mit Hilfe des Rechners 63 möglich, eine Reihe von verschiedenen Filternormen abzuspeichern und über die Tastatur 11 auszuwählen. Insbesondere sind im ROM 81 Filtercharakteristiken nach ANSI A, ANSI T und DIN 16536 abgespeichert. Je nach Bedarf können Dichten nach der einen oder anderen Norm berechnet werden. Dabei sei betont, daß bei einer Neuberechnung nach einer anderen Norm keine mechanischen Teile bewegt werden zu brauchen, weil beim Bewegen des Beugungsgitters 55 der gesamte Spektralbereich abgetastet worden ist.

Das im Rechner 63 abgespeicherte Programm gestattet weiterhin die Messung der maximalen Dichte innerhalb des erfaßten Spektralbereiches. Dabei wird einerseits die Dichte und andererseits die spektrale Lage des Dichtemaximums ermittelt und angegeben. Herkömmliche Densitometer können solche Größen nicht ausgeben. Die maximale Dichte kann auf verschiedene Arten interpretiert werden. Einerseits stellt sie den maximalen Wert im Dichtespektrum dar. Andererseits entspricht ihr Wert der Dichtemessung mit einem Schmalbandfilter, dessen Durchlaßbereich gerade diejenige Wellenlänge hat, wo die zu messende Farbe am dichtesten ist. Sie ist also die Dichtemessung mit einem sich automatisch der Meßfarbe jeweils optimal anpassenden Schmalbandfilter.

Wie bereits erwähnt, kann das Gerät auch farbmetrische Meßfunktionen ausführen. Aufgrund der gespeicherten Programme können folgende farbmetrische Meßgrößen ausgegeben werden : xyY, L*C*h*(ab) und L*u*v*. Im Rahmen der farbmetrischen Meßfunktionen kann zwischen einem Beobachtungswinkel von 2° und 10° sowie den Lichtarten A, C oder D65 gewählt werden.

Die im Rechner 63 vorgesehenen Speicher gestatten es, auf elegante Weise Vergleichsmessungen durchzuführen, bei denen für eine Qualitätsüberwachung die Meßwerte mit abgespeicherten Referenzwerten verglichen werden.

Dies ist bei dem beschriebenen Gerät für sämtliche Meßfunktionen, also für Spektren, densitometrische Größen und farbmetrische Größen möglich. Bei den Referenzwerten handelt es sich entweder um gemessene und abgespeicherte Referenzwerte oder um von Hand eingegebene Referenzwerte. Jeder der Referenzwerte besteht aus einem Spektrum, das in einem Referenzwertspeicher abgelegt ist und allen daraus abgeleiteten Meßgrößen. Mittels einer Handeingabe von Referenzwerten über die Tastatur 11 können auch Umrechnungen zwischen den Farbräumen vom Rechner 63 vorgenommen werden.

Bei dem beschriebenen Ausführungsbeispiel der Erfindung können neun verschiedene Referenzwerte abgespeichert werden. Um bei der Referenzwerterfassung oder bei einer Vergleichsmessung den gewünschten Referenzwert anzuwählen, sind im Programm des Rechners 63 zwei Möglichkeiten vorgesehen. Bei der

ersten Möglichkeit erfolgt eine Umschaltung der Referenzwert-Nummer von Hand. Die zweite Möglichkeit besteht in einer automatischen Auswahl des Referenzwertes. Dies ist speziell für die Messung von drucktechnischen Skalenfarben zweckmäßig. Bei einer Messung wird ermittelt, um welche Farbe es sich handelt und dementsprechend wird der zugehörige Referenzwert angewählt. Für die vier erwähnten Skalenfarben sind die ersten vier Referenznummern der neun Referenzwertspeicher vorreserviert.

Dem Fachmann ist bekannt, daß alle photometrischen Messungen auf Weiß bezogen werden. Da sowohl der Bezug auf Papier wie auch auf Absolutweiß üblich ist, ist bei dem beschriebenen Gerät vorgesehen, zwei Bezugsweiß abzuspeichern. Messungen mit dem beschriebenen Gerät gestatten einen Bezug auf beide Weiß, wobei bei der Ausgabe der Meßwert, bezogen auf das gerade gewählte Papierweiß oder absolute Bezugsweiß ausgegeben wird. Für die Umschaltung zwischen den Weißbezügen sind eine Umschaltung von Hand sowie eine automatische Umschaltung vorgesehen. Bei der Darstellung von densitometrischen Größen schaltet der Rechner 63 automatisch auf Papierweiß um. Bei farbmetrischen und bei spektralen Messungen erfolgt ein Bezug auf Absolutweiß.

Die oben erwähnten Meß- und Rechenergebnisse werden vom Rechner 63 über die Anzeigesteuerung 72 zur Anzeigeeinheit 73 ausgegeben, die es insbesondere gestattet, im Rahmen der Densitometrie Balkendiagramme der Dichten, bei der Bearbeitung von Spektren graphische Darstellungen der Spektren und bei einem Einsatz in der Farbmetrik einen Meßwert im Farbraum darzustellen. Wenn Vergleichsmessungen durchgeführt werden, werden jeweils die Differenzen zum Meßwert dargestellt.

In Fig. 3 ist in der Nähe des Meßkopfes 4 ein Lampenüberwachungsschaltkreis 82 als Block dargestellt, der dazu dient, die Intensität des von der Lampe 56 ausgestrahlten Lichtes zu überwachen. Dazu sind mehrere Photodioden 83, 84 und 85 vorgesehen, von denen stellvertretend in Fig. 3 die Photodiode 83 dargestellt ist, während in dem detaillierteren Blockdiagramm gemäß Fig. 4 alle drei Photodioden dargestellt sind.

Das in Fig. 4 dargestellte Blockdiagramm veranschaulicht neben dem Lampenüberwachungsschaltkreis 82 den dem Verstärker 64 entsprechenden Proportionalverstärker 89 und den Analog/Digital-Wandler 65. Bei einer Realisierung der verschiedenen Komponenten entsprechend dem Blockdiagramm nach Fig. 4 bildet der Lampenüberwachungsschaltkreis 82 mit den an die Photodiode 62 angeschlossenen Komponenten eine bauliche Einheit. Die Photodiode 62 dient zur Durchführung der Hauptaufgabe, nämlich der Messung des vom Gitter 55 spektral aufgeteilten Lichtes. Zusätzlich muß aber die Intensität der Lampe 56 überwacht werden, um Meßfehler zu vermeiden. Dazu dienen die drei Photodioden 83, 84, 85 des Lampenüberwachungsschaltkreises 82, denen jeweils Filter 86, 87, 88 für Rot, Grün und Blau zugeordnet sind. Jeder der Photodioden 83 bis 85 dient somit zur Überwachung der Lampe an einer von drei verschiedenen spektralen Stützstellen.

Die in Fig. 4 dargestellte Schaltung gestattet eine Messung mit einer hohen Dynamik, da die relative Genauigkeit bei "dunkel" in etwa gleich der relativen Genauigkeit bei einer "hellen" Messung des spektralen Lichtes sein soll. Um die Verarbeitung der Meß- und Überwachungsdaten im Rechner 63 durchführen zu können, werden sowohl die Intensität des Meßlichtes als auch die des Lampenlichtes digitalisiert, wobei gemäß dem Blockschaltbild in Fig. 4 ein und derselbe Analog/Digital-Wandler vorgesehen ist.

Die Photodiode 62 speist einen Photostrom in den Eingang eines Proportionalverstärkers 89, dessen Ausgangsspannung die Eingänge eines ersten Holdintegrators 90 und eines zweiten Holdintegrators 91 beaufschlagt. Die Holdintegratoren 90 und 91 integrieren die Ausgangsspannung des Proportionalverstärkers 89 und werden jeweils abwechselnd abgefragt und zurückgesetzt.

Die Ausgänge der Holdintegratoren 90 und 91 sind jeweils mit dem ersten Eingang 92 und dem zweiten Eingang 93 eines Multiplexers 94 verbunden. Drei weitere Eingänge 95, 96, 97 werden mit Lampenlichtsignalen beaufschlagt, die aus den Photoströmen der Photodioden 83 bis 85 abgeleitet und mit Hilfe von Proportionalverstärkern 98 bis 100 verstärkt werden. Außerdem verfügt der Multiplexer 94 noch über einen Eingang 102, an dem eine Spannung von 0 Volt liegt. Der analoge Multiplexer 94 schaltet die an seinen Eingängen 92, 93, 95, 96, 97, 102 liegenden Eingangsspannungen abwechselnd auf seinen Ausgang 101, wobei abwechselnd ein Meßlichtsignal und ein weiteres Lampenlichtsignal zum Ausgang 101 geschaltet wird. Die Schaltweise des Multiplexers 94 ist demnach so, daß am Augang 101 nacheinander die Ausgangssignale in der folgenden Reihenfolge auftreten : erster Holdintegrator 90, Proportionalverstärker 98, zweiter Holdintegrator 91, Proportionalverstärker 99, erster Holdintegrator 90, Proportionalverstärker 100, zweiter Holdintegrator 91 Anschließend wird der auf 0 Volt liegende Eingang 102 zum Ausgang 101 durchgeschaltet. Im Anschluß daran wiederholt sich die oben erwähnte Reihenfolge unter der Steuerung eines separaten Schaltwerkes 103, das vom Mikroprozessor des Rechners 63 getaktet wird.

Die Holdintegratoren 90 und 91 halten die Spannung, solange sie auf den Ausgang 101 durchgeschaltet sind. Unmittelbar danach werden sie vom Schaltwerk 103 über einen in der Zeichnung nicht dargestellten Rücksetzeingang auf Null gesetzt. Währenddem der jeweils andere Holdintegrator 91, 90 oder ein Proportionalverstärker 98 bis 100 des Lampenübewachungskanals auf den Ausgang 101 durchgeschaltet ist, wird integriert. Auf diese Weise kann das Rauschen der Ausgangsspannung des Proportionalverstärkers 89 im Meßkanal optimal unterdrückt werden.

Zu der Ausgangsspannung am Ausgang 101 wird in einem Addierer 107 eine Konstantspannung $U_K$ addiert. Die Summe beaufschlagt einen Integrator 103, dessen Anstiegszeit mit Hilfe eines Fensterkomparators 104 gemessen wird, indem die Zeit $t_x$, während der das Eingangssignal des Fensterkomparators 104 innerhalb des eingestellten Fensters liegt, mit Hilfe eines vom Fensterkomparator 104 gesteuerten Zählers 105 gemessen wird. Der Zähler 105 zählt dabei während der Zeit $t_x$ die Takte eines in der Zeichnung nicht dargestellten Taktgenerators. Der Zählerstand T am Ende der Zeit $t_x$ ist ein Maß für den Photostrom $I_{PH}$ der jeweils vom Multiplexer 94 selektierten Photodiode 62, 83, 84 oder 85, wobei gilt:

$$T = \frac{K_1}{K_2 + I_{PH}} \qquad K_1, K_2: \text{wählbare Konstanten}$$

Durch die Wahl der Konstanten $K_1$ und $K_2$ könnten die Forderungen der Dynamik und Genauigkeit erfüllt werden. Das zur Koordinierung des Schaltens des Multiplexers 94 der Holdintegratoren 90 und 91 sowie des Integrators 103 verwendete Schaltwerk ist ein synchroner Zustands-Automat.

Ersetzt man die Photodiode 62 durch eine Diodenzeile, so ist es möglich, auf den Antrieb des Beugungsgitters 55 zu verzichten. In einem solchen Fall ist es zweckmäßig, jede Diode der Diodenzeile über einen getrennten Verstärker und einen Multiplexer mit dem Eingang des Analog/Digital-Wandlers 65 zu verbinden. Die Abtastung erfolgt dann durch Umschalten des Multiplexers.

## Patentansprüche

1. Handgerät zur Erfassung von optischen Remissionseigenschaften mit einem Meßkopf (4), der eine Lichtquelle (56), eine Beleuchtungsoptik zur Beleuchtung einer mit dem Handgerät zu untersuchenden Meßfläche (57) sowie eine Meßoptik zum Auffangen des von der Meßfläche (57) zurückgestrahlten Meßlichtes aufweist, und mit einer vom Meßlicht beaufschlagten optoelektronischen Anordnung (55, 62) zur Umwandlung der optischen Signale in auf einer Anzeigeeinheit (10, 73) darstellbare Daten, **dadurch gekennzeichnet**, daß die optoelektronische Anordnung eine Vorrichtung zur spektralen Zerlegung des Meßlichtes, die über einen Monochromator mit einem holographischen, konkaven Reflexionsgitter (55) verfügt, sowie eine Anordnung zur Erfassung und Auswertung des Spektrums des Meßlichtes aufweist.

2. Handgerät nach Anspruch 1, **dadurch gekennzeichnet**, daß das Spektrum durch eine Photodiodenzeile abtastbar ist.

3. Handgerät nach Anspruch 1, **dadurch gekennzeichnet**, daß das Gitter (55) zur Abtastung des Spektrums um eine rechtwinklig zur Eintritts- und Austrittsebene des Lichtes verlaufende Achse (30) verdrehbar ist und daß das spektral zerlegte Licht einen Messlichtphotodetektor (62) beaufschlagt.

4. Handgerät nach Anspruch 3, **dadurch gekennzeichnet**, daß die Achse (30) des Gitters dauernd mit einem Antriebsmotor (31) mechanisch gekoppelt ist, der zusätzlich mit einem Antrieb zum Verfahren des Meßkopfes (4) parallel zur Standfläche des Handgerätes zwischen einer Ruheposition und einer Meßposition koppelbar ist.

5. Handgerät nach einem der vorstehenden Ansprüche, **dadurch gekennzeichnet**, daß der Lichtquelle (56) zur Intensitätsüberwachung mehrere in unterschiedlichen Spektralbereichen (86 bis 88) empfindliche Überwachungs-Photodetektoren (83 bis 85) zugeordnet sind.

6. Handgerät nach Anspruch 3 und 5, **dadurch gekennzeichnet**, daß die Photodetektoren (62, 83 bis 85) an einen Analog/Digital-Wandler (65) angeschlossen sind, der einen Multiplexer (94) aufweist, über den abwechselnd ein Signal des Meßlichtphotodetektors (62) und eines der Überwachungsphotodetektoren (83 bis 85) selektierbar ist.

7. Handgerät nach Anspruch 6, **dadurch gekennzeichnet**, daß am Ende eines Multiplexerzyklus ein spannungloser Eingang (102) des Multiplexers (94) selektierbar ist.

8. Handgerät nach einem der Ansprüche 3, 4, 6 oder 7, **dadurch gekennzeichnet**, daß der Meßlichtphotodetektor (62) zwei Holdintegratoren (90, 91) beaufschlagt, die abwechselnd abfragbar sind.

9. Handgerät nach einem der vorstehenden Ansprüche, **dadurch gekennzeichnet**, daß die Anordnung zur Erfassung und Auswertung des Spektrums des Meßlichtes einen Rechner (63) umfaßt, der aus den erfaßten Spektren je nach Wunsch densitometrische Größen oder farbmetrische Größen errechnet.

10. Handgerät nach Anspruch 9, **dadurch gekennzeichnet**, daß der Rechner (63) ein nichtflüchtigtes RAM (76) für die Speicherung des Gerätestatus sowie von Eichdaten und ein ROM (81) für die Speicherung eines

Programmes zur Steuerung des Meßablaufs sowie für die Speicherung diverser Tabellen umfaßt.

11. Handgerät nach Anspruch 10, **dadurch gekennzeichnet**, daß Vergleichsmessungen mit verschiedenen Referenzwerten und daß insbesondere auf verschiedene Weiß bezogene Messungen durchführbar sind.

12. Handgerät nach Anspruch 11, **dadurch gekennzeichnet**, daß eine automatische Referenzwertumschaltung in Abhängigkeit von der erfaßten drucktechnischen Skalenfarbe sowie eine automatische Bezugs-Umschaltung bei einer Umschaltung zwischen densitometrischen und farbmetrischen Größen vorgesehen ist.

13. Handgerät nach Anspruch 10, **dadurch gekennzeichnet**, daß bei einer densitometrischen Auswertung des Spektrums unabhängig und ohne Vorgabe einer spektralen Lage die maximale Dichte sowie deren spektrale Lage anzeigbar sind.

14. Handgerät nach Anspruch 10, **dadurch gekennzeichnet**, daß bei einer densitometrischen Auswertung des Spektrums eine Umschaltung zwischen verschiedenen vorgegebenen Filternormen vorgesehen ist.

15. Handgerät nach einem der vorstehenden Ansprüche, **dadurch gekennzeichnet**, daß die Anzeigeeinheit (73) ein Anzeigefeld (10) aufweist, das die graphische Darstellung eines Spektrums, eines Balkendiagramms, eines Farbraumes oder dergleichen gestattet.

16. Handgerät nach einem der vorstehenden Ansprüche, **dadurch gekennzeichnet**, daß im Meßkopf (4) ein von Hand verstellbares Filterrad (9) mit mehreren auf der Anzeigeeinheit (10, 73) anzeigbaren Positionen vorgesehen ist.

17. Handgerät nach Anspruch 16, **dadurch gekennzeichnet**, daß das Filterrad (9) drei Positionen aufweist, wobei in der ersten keine Filterung, in der zweiten eine Polarisation und in der dritten eine D65-Konversions-Filterung im Meßkopf (4) erfolgt.

18. Handgerät nach einem der vorstehenden Ansprüche, **dadurch gekennzeichnet**, daß das Gerät eine bidirektionale serielle Schnittstelle (74) aufweist, über die die Funktionen des Gerätes fernsteuerbar sind und über die die erfaßten und errechneten Meßwerte abrufbar sowie ausgebbar sind.

19. Handgerät nach einem der vorstehenden Ansprüche, **dadurch gekennzeichnet**, daß das Gerät für den Betrieb der elektrischen und elektronischen Komponenten einen wiederaufladbaren Akkumulator (75) aufweist, der einen Spannungswandler (78) zur Erzeugung der benötigten Versorgungsspannungen speist, und daß ein synchroner Zustandsautomat vorgesehen ist, um analoge Überwachungsschaltungen sowie das Ein- und Ausschalten verschiedener Baueinheiten zu steuern, wobei zur Energieeinsparung die Hauptversorgung nach ca. 0,1 bis 1,5 Sekunden und die Anzeige (10) nach ca. 30 Sekunden abschaltbar ist, wahrend andere Baueinheiten wie eine Tastatur (11), eine serielle Schnittstelle (74) und ein Speicher (76) unter Spannung bleiben.

## Claims

1. Manual device for the determination of optical reflection properties, having a measuring head (4) comprising a source of light (56), optical means for illuminating a measuring surface (57) that is to be examined by the manual device, and optical measuring means for capturing the measuring light that is reflected by the measuring surface (57), and having an optoelectronic arrangement (55, 62), which receives the light to be measured, for converting the optical signals into data that can be displayed on a display unit (10, 73), said optoelectronic arrangement having a device for spectrally dispersing the measuring light, which device is equipped with a monochromator having a holographic concave reflection grating (55), together with an arrangement for detecting and evaluating the spectrum of the measuring light.

2. Manual device according to claim 1, wherein the spectrum is scanned by a row of photodiodes.

3. Manual device according to claim 1, wherein the grating (55) for scanning the spectrum is rotatable about an axle (30) extending at right angles to the incidence and emergence plane of the light, and wherein the spectrally dispersed light impinges on a photodetector (62) for the measuring light.

4. Manual device according to claim 3, wherein the axle (30) of the grating is permanently mechanically coupled to a drive motor (31), which may additionally be coupled to a drive means for displacement of the measuring head (4) parallel to the support surface of the manual device between a rest position and a measuring position.

5. Manual device according to any one of the preceding claims, wherein a plurality of monitoring photodetectors (83 to 85) that are sensitive to different spectral ranges (86 to 88) are associated with the light source (56), for monitoring intensities.

6. Manual device according to claim 3 and claim 5, wherein the photodetectors (62, 83 to 85) are connected to an analog/digital converter (65) having a multiplexer (94) by means of which a signal from the photodetector (62) for the measuring light and a signal from one of the monitoring photodetectors (83 to 85) can be selected alternately.

7. Manual device according to claim 6, wherein at the end of a multiplexer cycle a zero voltage input (102)

to the multiplexer (94) can be selected.

8. Manual device according to any one of claims 3, 4, 6 and 7, wherein the photodetector (62) for the measuring light feeds two hold integrators (90, 91) which can be sampled alternately.

9. Manual device according to any one of the preceding claims, wherein the arrangement for detecting and evaluating the spectrum of the measuring light includes a computer (63), which calculates densitometric or colorimetric values, as desired, from the spectra detected.

10. Manual device according to claim 9, wherein the computer (63) contains a non-volatile RAM (76) for storing the status of the device, together with calibratibn data, and a ROM (81) for storing a program for controlling the measuring process and for storing various tables.

11. Manual device according to claim 10, wherein comparison measurements with different reference values can be carried out and wherein, especially, measurements related to different whites can be carried out.

12. Manual device according to claim 11, wherein there are provided automatic reference value switching in response to the print-technical scale colour detected, and automatic reference value switching when switching between densitometric and colorimetric values.

13. Manual device according to claim 10, wherein, independently and without specifying a spectral position, in the case of a densitometric evaluation of the spectrum, the maximum density and its spectral position can be displayed.

14. Manual device according to claim 10, wherein switching between different predetermined filter standards is provided in the case of a densitometric evaluation of the spectrum.

15. Manual device according to any one of the preceding claims, wherein the display unit (73) has a display panel (10) which allows the graphical display of a spectrum, a bar diagram, a colour area or the like.

16. Manual device according to any one of the preceding claims, wherein a manually adjustable filter wheel (9) having a plurality of positions that can be displayed on the display unit (10, 73) is provided in the measuring head (4).

17. Manual device according to claim 16, wherein the filter wheel (9) has three positions, with no filtering taking place in the measuring head (4) in the first position, polarisation taking place in the second position and D65 conversion filtering taking place in the third position.

18. Manual device according to any one of the preceding claims, wherein the device has a bi-directional serial interface (74) by means of which the functions of the device can be remotely controlled and the detected and calculated measured values can be called up and output.

19. Manual device according to any one of the preceding claims, wherein for the purpose of operating the electrical and electronic components the device has a rechargeable battery (75) that supplies a voltage converter (78) for generating the supply voltages required, and wherein an automatic synchronous status device is provided for controlling analogous monitoring circuits and for actuating and deactivating various structural units, it being possible for the principal power supply to be turned off after about 0.1 to 1.5 seconds and for the display (10) to be turned off after about 30 seconds, in order to save power, while other structural units, such as a keyboard (11), a serial interface (74) and a memory (76), remain on.

## Revendications

1. Appareil à main destiné à capter des propriétés optiques de luminance de réflexion, cet appareil comportant une tête (4) de mesure qui présente une source lumineuse (56), une optique d'éclairage, destinée à l'éclairage d'une surface (577) de mesure qui doit être examinée au moyen de l'appareil à main, ainsi qu'une optique de mesure destinée à capter la lumière renvoyée par la surface (57) de mesure, et comportant un dispositif opto-électronique (55, 62) soumis à la lumière de mesure et destiné à la conversion des signaux optiques en données susceptibles d'être représentées sur une unité d'affichage (10, 75), appareil caractérisé en ce que le dispositif opto-électronique présente un dispositif destiné à la décomposition spectrale de la lumière de mesure, lequel dispose d'un monochromateur comportant une grille (55) concave de réflexion holographique ainsi qu'un dispositif destiné à capter et à exploiter le spectre de la lumière de mesure.

2. Appareil à main selon la revendication 1, caractérisé en ce que le spectre peut être exploré au moyen d'une rangée de diodes.

3. Appareil à main selon la revendication 1, caractérisé en ce que la grille ou le réseau (55) destiné(e) à l'exploration du spectre peut être mis(e) en rotation sur un axe qui s'étend perpendiculairement au plan d'entrée et au plan de sortie de la lumière et en ce que la lumière décomposée spectralement frappe un photodétecteur (62) de lumière de mesure.

4. Appareil à main selon la revendication 3, caractérisé en ce que l'axe (30) du réseau est couplé mécaniquement en permanence à un moteur (31) d'entraînement, qui peut en plus être couplé à un dispositif d'entraînement destiné à déplacer la tête (4) de mesure parallèlement à la surface d'assise ou d'appui de l'appareil de mesure, entre une position de repos et une position de mesure.

5. Appareil à main selon une des revendications précédentes, caractérisé en ce que la source (56) de lumière est, en vue de la surveillance de l'intensité, dotée de plusieurs photodétecteurs (83 à 85) de surveillance sensibles dans des domaines spectraux (86 à 88) différents.

6. Appareil à main selon les revendications 3 et 5, caractérisé en ce que les photodétecteurs (62, 83 à 85) sont connectés à un convertisseur (65) analogique/numérique, qui présente un multiplexeur (94) par l'intermédiaire duquel un signal du photodétecteur (62) de lumière de mesure et d'un des photodétecteurs (83 à 85) de surveillance peut être sélectionné en alternance.

7. Appareil à main selon la revendication 6, caractérisé en ce qu'à la fin d'un cycle de multiplexeur, une entrée (102) exempte de tension électrique du multiplexeur (94) peut être sélectionnée.

8. Appareil à main selon une des revendications 3, 4, 6 ou 7, caractérisé en ce que le photodétecteur (62) de lumière de mesure est appliqué à deux intégrateurs (90, 91) de garde qui peuvent être interrogés en alternance.

9. Appareil à main selon une des revendications précédentes, caractérisé en ce que le dispositif destiné à capter et à exploiter le spectre de la lumière de mesure comprend un ordinateur (63) qui calcule à partir des spectres captés, à volonté soit des grandeurs densitométriques, soit des grandeurs colorimétriques.

10. Appareil à main selon la revendication 9, caractérisé en ce que l'ordinateur (63) comprend une mémoire RAM (76) vive et non volatile, destinée à l'enregistrement de l'état de l'appareil ainsi que de données-étalons, et une mémoire ROM (81) (mémoire morte), destinée à enregistrer un programme de commande du déroulement de la mesure, ainsi qu'à l'enregistrement de divers tableaux.

11. Appareil à main selon la revendication 10, caractérisé en ce que des mesures de comparaison avec différentes valeurs de référence peuvent être exécutées et qu'en particulier des mesures peuvent être exécutées en référence à des blancs différents.

12. Appareil à main selon la revendication 11, caractérisé en ce que l'on prévoit une commutation automatique des valeurs de référence, en fonction de la couleur scalaire, selon la technique d'imprimerie, qui a été captée ainsi qu'une commutation automatique des références dans le cas d'une commutation entre des grandeurs densitométriques et des valeurs colorimétriques..

13. Appareil à main selon la revendication 10, caractérisé en ce que, dans le cas d'une évaluation densitométrique du spectre, la densité maximale, ainsi que sa position dans le spectre, peuvent être indiquées de manière indépendante et sans fixation préalable d'une position dans le spectre.

14. Appareil à main selon la revendication 10, caractérisé en ce que, dans le cas d'une évaluation densitométrique du spectre, on prévoit une commutation entre différentes normes de filtrage préétablies.

15. Appareil à main selon une des revendications précédentes, caractérisé en ce que l'unité (73) d'affichage présente un champ (10) d'affichage qui autorise la représentation graphique d'un spectre, d'un diagramme à colonnes ou barres, d'un domaine de couleurs, ou similaires.

16. Appareil à main selon une des revendications précédentes, caractérisé en ce que, dans la tête (4) de mesure, est prévu un disque (9) à filtres, réglable manuellement et comportant plusieurs positions susceptibles d'être affichées sur l'unité (10, 73) d'affichage.

17. Appareil à main selon la revendication 16, caractérisé en ce que le disque (9) à filtres présente trois positions, aucun filtrage intervenant dans la tête de mesure dans la première, une polarisation intervenant dans la seconde et un filtrage de conversion en D65, dans la troisième.

18. Appareil à main selon une des revendications précédentes, caractérisé en ce que l'appareil présente une interface (74) série bidirectionnelle, par l'intermédiaire de laquelle les fonctions de l'appareil peuvent être télécommandées et par l'intermédiaire de laquelle les valeurs de mesure captées et calculées peuvent être appelées ainsi qu'éditées.

19. Appareil à main selon une des revendications précédentes, caractérisé en ce que l'appareil présente, pour le fonctionnement des composants électriques et électroniques, un accumulateur (75) rechargeable, qui alimente un transformateur (78) de tension destiné à produire les différentes tensions d'alimentation nécessaires, et en ce qu'un automate d'états synchrone est prévu, afin de commander des circuits analogiques de surveillance ainsi que la commutation de marche et la commutation d'arrêt des différentes unités structurelles, l'alimentation principale pouvant, en vue d'économiser l'énergie, être coupée après environ 0,1 à 1,5 s, et l'affichage (10), après environ 30 s, tandis que d'autres unités structurelles, telles qu'un clavier (11), une interface série (74) et une mémoire (76) restent sous tension.

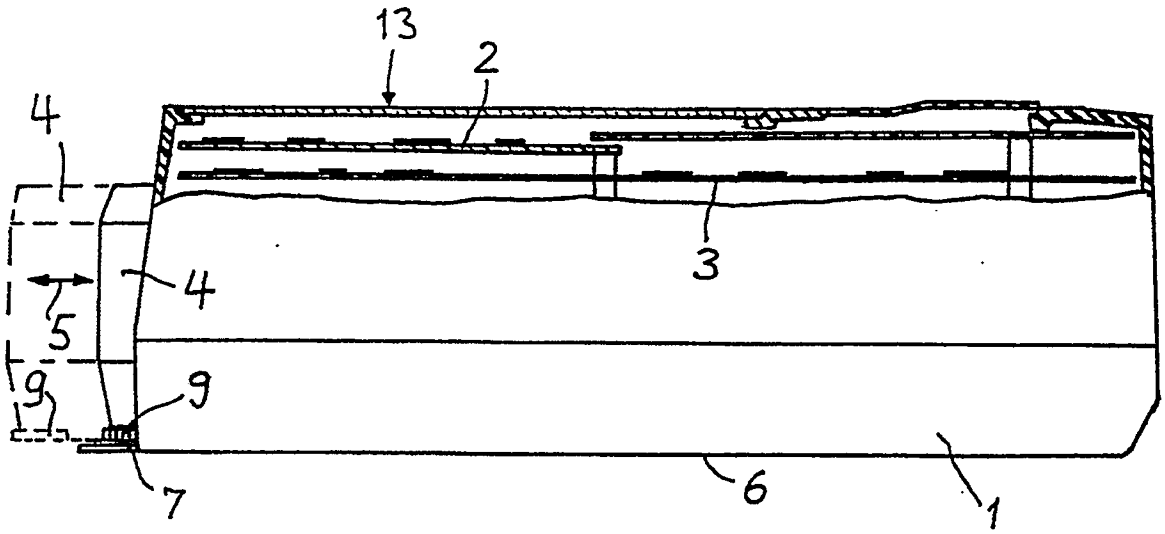


Fig. 1

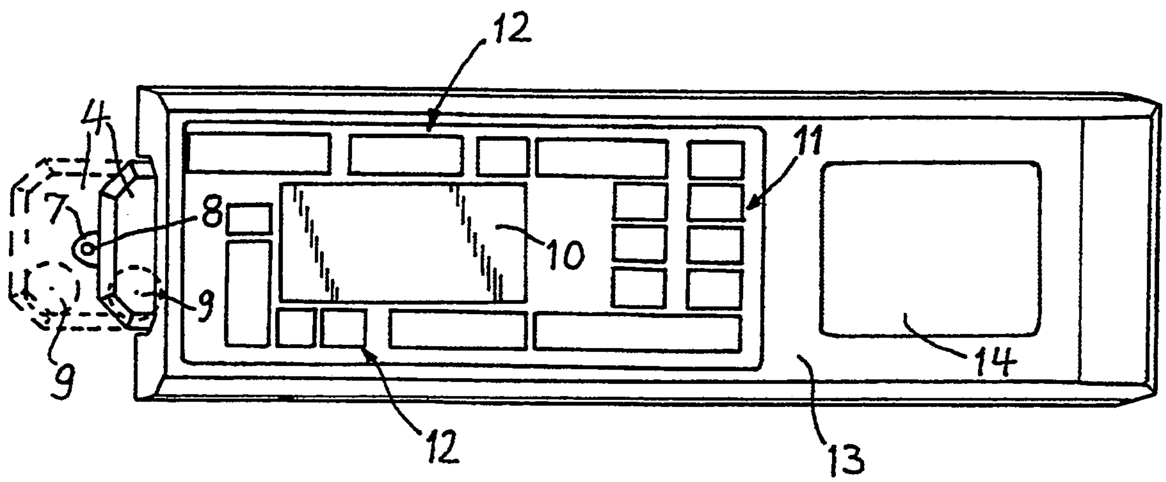


Fig. 2

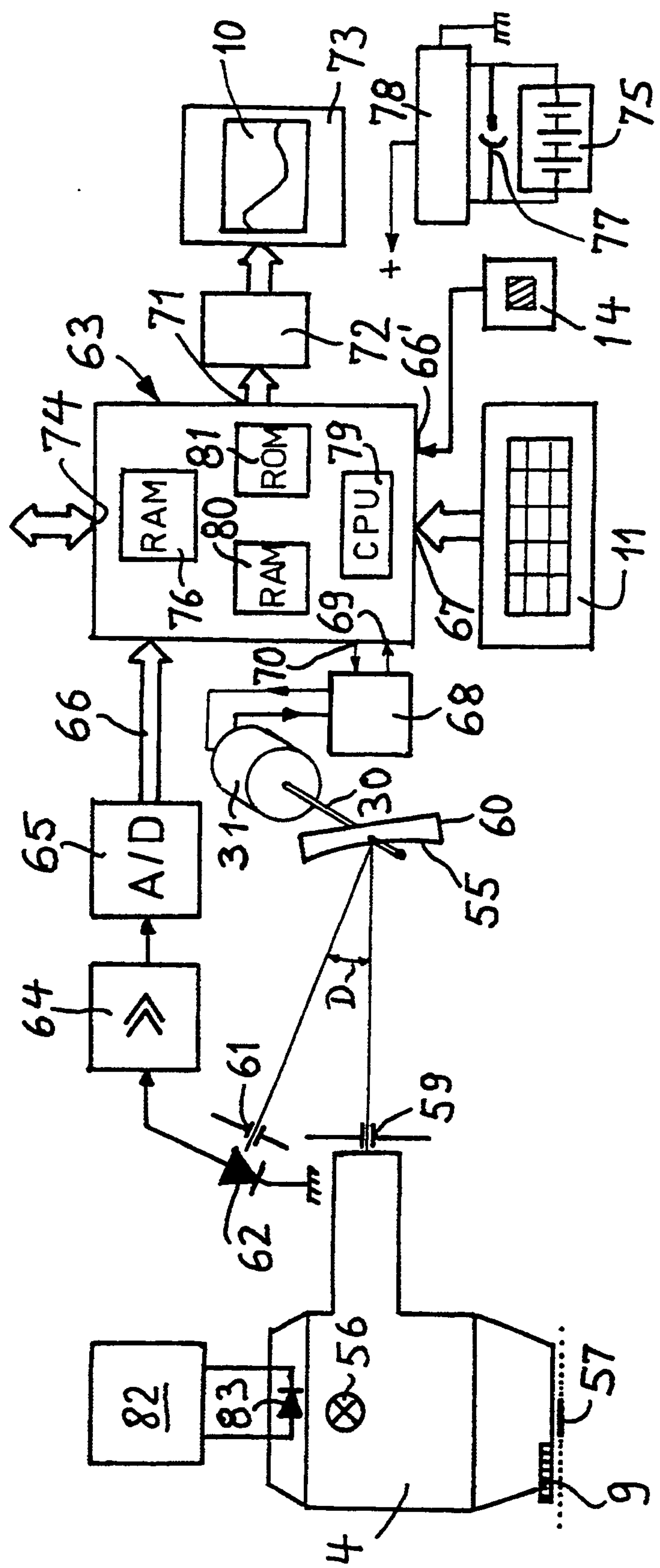
RAM
RAM
ROM
CPU
A/D
10
73
78
75
77
14
72
66'
71
63
74
81
80
79
76
69
67
11
70
68
66
65
64
31
30
60
55
D
61
59
62
82
83
56
57
9
4

Fig. 3

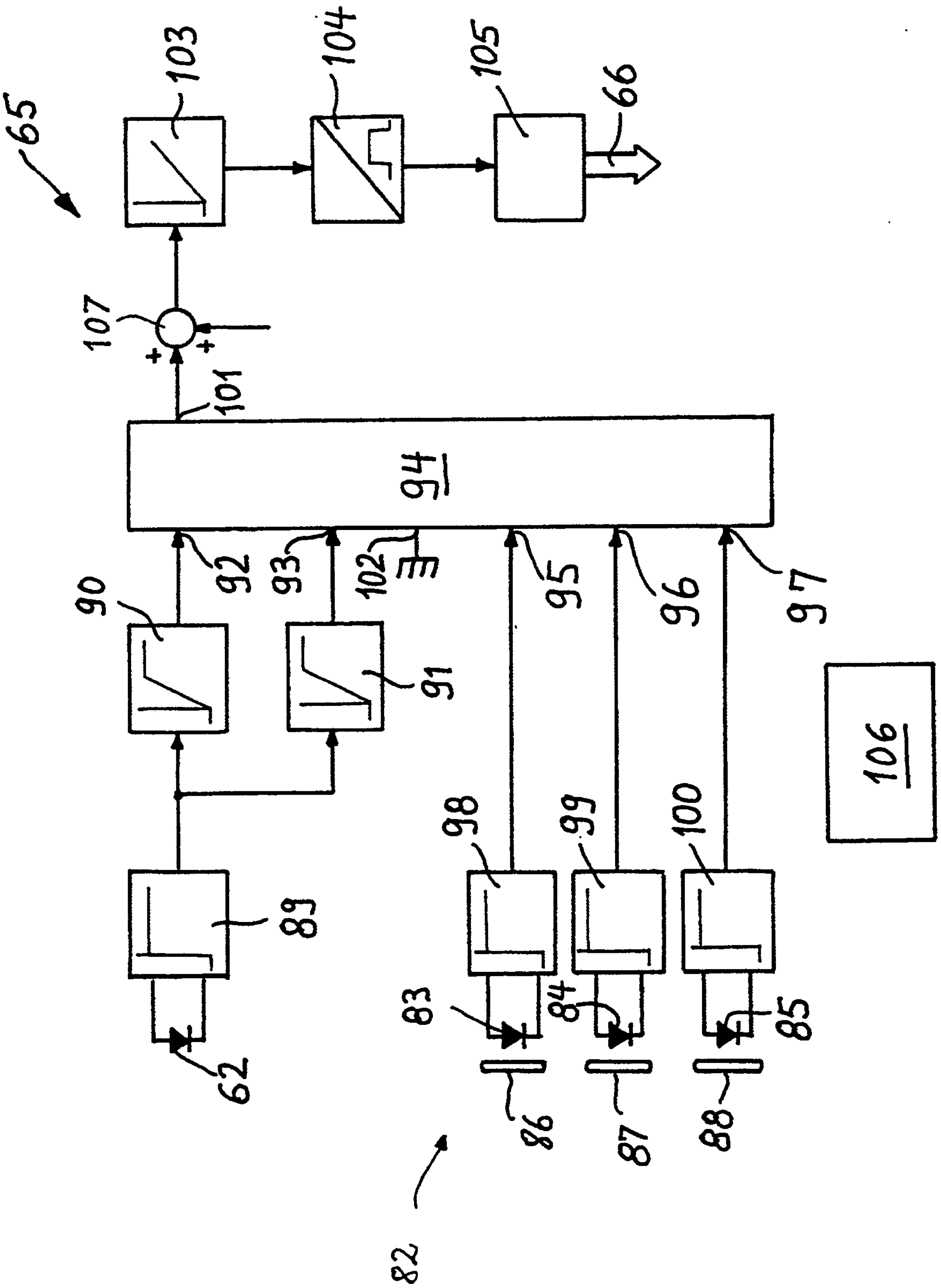
65
103
104
105
66
107
101
94
90
91
92
93
102
95
96
97
106
89
98
99
100
62
83
84
85
86
87
88
82

Fig. 4